**Europäisches Patentamt**

(19) **European Patent Office**

**Office européen des brevets**

(11) Numéro de publication: **0 202 150 B1**

## (12) FASCICULE DE BREVET EUROPEEN

(45) Date de publication du fascicule du brevet:
05.09.90

(51) Int. Cl.⁵: **G02F 1/133, H01L 21/84**

(21) Numéro de dépôt: 86400907.1

(22) Date de dépôt: 24.04.86

(54) Elément de commande non linéaire pour écran plat de visualisation électrooptique et son procédé de fabrication.

(30) Priorité: 07.05.85 FR 8506964

(43) Date de publication de la demande:
20.11.86 Bulletin 86/47

(45) Mention de la délivrance du brevet:
05.09.90 Bulletin 90/36

(84) Etats contractants désignés:
DE GB IT NL

(56) Documents cités:
EP-A- 0 070 598
EP-A- 0 073 705
EP-A- 0 150 728
FR-A- 2 518 788
FR-A- 2 548 450
GB-A- 2 146 827

APPLIED PHYSICS LETTERS,
vol. 44, no. 2, 15 janvier 1984, pages 205-206, American
Institute of Physics, New York, US; N. SZYDLO et al.:
"New amorphous silicon nonlinear element for liquid
crystal display addressing"

(73) Titulaire: THOMSON-CSF, 51, Esplanade du Général de
Gaulle, F-92800 Puteaux(FR)

(72) Inventeur: Szydlo, Nicolas, THOMSON-CSF
SCPI 19, avenue de Messine, F-75008 Paris(FR)
Inventeur: Perbet, Jean-Noel, THOMSON-CSF
SCPI 19, avenue de Messine, F-75008 Paris(FR)
Inventeur: Kasprzak, Rolande, THOMSON-CSF
SCPI 19, avenue de Messine, F-75008 Paris(FR)

(74) Mandataire: Lepercque, Jean et al, THOMSON-CSF
SCPI, F-92045 PARIS LA DEFENSE CEDEX 67(FR)

## Description

L'invention concerne un procédé de fabrication d'un élément de commande non linéaire pour écran plat de visualisation électrooptique, notamment pour écran de visualisation à cristal liquide.

Le domaine général de l'invention est l'électronique en couche mince sur grande surface. L'application visée par la présente invention est la commande intégrée de chaque point élémentaire d'un écran à cristal liquide.

Comme il est connu, ces écrans comportent généralement un grand nombre de points élémentaires ou éléments d'image de forme carrée ou rectangulaire. Ces éléments d'image peuvent être adressés individuellement. La définition de l'écran est fonction du nombre de points susceptibles de recevoir une information. La commande de chaque point se fait par application d'un champ électrique. Pour la visualisation d'information vidéo, il a été proposé des affichages de type matriciel. Chaque élément d'image est alors défini par l'intersection de deux réseaux de conducteurs orthogonaux appelés lignes et colonnes.

L'adressage d'un élément d'image au moyen de tensions de commande appliquées à la ligne et à la colonne qui le concernent n'a pas besoin d'être maintenu si l'on adopte une technique de multiplexage temporel permettant par récurrence de rafraîchir l'état de l'écran. Cette technique se fonde sur un effet de persistance qui peut être physiologique ou disponible au sein de l'élément de l'écran. Dans le cas de dispositifs d'affichage à cristaux liquides, on peut assimiler un élément d'image à un condensateur dont la constante de temps est suffisante pour maintenir la charge entre deux adressages transitoires successifs.

La conception d'une commande matricielle par conducteurs de lignes et de colonnes pour obtenir une grande complexité d'écran (Nombre de lignes élevé) impose de monter en série avec l'élément image une résistance non linéaire qui est pratiquement isolante en-deçà d'un seuil de tension et qui devient de plus en plus conducteur au-delà de ce seuil.

Un tel élément non linéaire peut être en matériau varistance comme cela est décrit dans la demande de brevet français N° 81 16217 déposée le 25 août 1981 au nom de la Demanderesse et publiée sous le N° 2 512 240.

Actuellement, les exigences de la technique en matière d'écrans de visualisation portent en particulier, sur une meilleure définition de l'image. Dans le cas des écrans du type à affichage matriciel, on est alors amené à concevoir des dispositifs comportant un nombre élevé de lignes ou de colonnes d'adressage. Leurs nombres peut aller jusqu'à 512 ou même 1024. Ceci augmente d'autant les éléments de commutation, donc le nombre de varistances. Pour la fabrication en série, il est nécessaire notamment d'obtenir une bonne reproductibilité et une grande stabilité de ces composants. Il est en outre nécessaire d'adapter, et ce également avec une bonne reproductibilité, la capacité électrique du composant à celle de la cellule associée. Or les matériaux couramment utilisés, tels que des agglomérats de poudre d'oxyde de zinc, contenant des particules d'oxyde de bismuth et d'oxyde de manganèse ou autre matériau analogue, ne permettent pas de satisfaire entièrement ces exigences. La reproductibilité et la stabilité des varistances dépendent entre autre de la taille de grain et des techniques de passivation des joints de grains mis en oeuvre lors de la fabrication. La capacité parasite de la varistance liée également aux joints de grains est difficilement contrôlable.

D'autres éléments de commutation peuvent être utilisés. De toute façon, les écrans de visualisation à cristal liquide présentent généralement des défauts d'homogénéité du contraste suivant les éléments d'image, dus à une dispersion des caractéristiques des éléments de commutation qui peut être importante et qui est difficile à éliminer sur de grandes surfaces. Ces défauts peuvent également trouver leur origine, dans une moindre mesure, dans l'épaisseur de la couche de cristal liquide et dans sa couche d'accrochage.

Afin de pallier ces inconvénients, on connaît des dispositifs dans lesquels les éléments non linéaires sont des transistors à films minces principalement à base de silicium amorphe ou de silicium polycristallin. Cependant, ce type de technologie présente quelques difficultés qu'il faut résoudre pour un adressage de haute qualité :

1) meilleur contrôle des caractéristiques que dépendent des propriétés de deux couches (silicium et isolant) et de leur interface;

2) une technologie d'auto-alignement est nécessaire pour une meilleure reproductibilité sur grande surface.

D'autres solutions prévoient que les éléments non linéaires sont des éléments dipolaires telle que la structure à base de deux diodes réalisées en série et en opposition.

Ces diodes sont des diodes semiconductrices possédant toutes le même point de fonctionnement dans la caractéristique courant-tension. La demande de brevet français No 8 314 542 déposée le 13 septembre 1983 par la Demanderesse et publié sous le No 2 551 902 décrit de tels dispositifs réalisés notamment sous forme de diodes Schottky.

Cependant, la mise en œuvre de cette solution nécessite généralement au moins quatre niveaux de masquage.

La présente invention concerne un procédé de fabrication d'un élément de commande non linéaire permettant de réduire à deux le nombre de masquages et ne nécessitant pas une grande précision dans la réalisation des masques. De plus, les éléments de commande obtenus occupent très peu de place en surface et sont donc moins visibles que ceux connus dans la technique.

L'invention concerne donc un procédé de fabrication d'un élément de commande non linéaire pour écran de visualisation disposé sur une face plane d'un substrat comportant les phases successives suivantes:

a) une première phase de dépôt d'une première couche d'un matériau métallique;

b) une deuxième phase de dépôt d'un première couche d'un matériau semi-conducteur amorphe non dopé;

c) une troisième phase de dépôt d'un couche d'un matériau semi-conducteur amorphe dopé;

d) une quatrième phase de dépôt d'une deuxième couche d'un matériau semi-conducteur amorphe non dopé;

e) une cinquième phase de dépôt d'une deuxième couche d'un matériau métallique;

f) une sixième phase de découpage dans toutes lesdites couches, déposées au cours des phases précédentes, d'une colonne de commande;

g) une septième phase de passivation de flancs de la colonne réalisée au cours de la phase précédente;

h) une huitième phase de dépôt, sur l'ensemble substrat et colonne, d'une couche d'un matériau conducteur;

i) une neuvième phase de découpage d'au moins une électrode de commande connectée à la deuxième couche de matériau métallique, dans la couche de matériau conducteur.

Les différents objets et caractéristiques de l'invention apparaîtront dans la description qui va suivre faite en se reportant aux figures annexées qui représentent:

la figure 1, un exemple de réalisation d'un élément de commande non linéaire;

les figures 2 à 7, un exemple de procédé de fabrication d'un élément de commande non linéaire selon l'invention;

les figures 8 à 10, une variante d'un exemple de procédé de fabrication d'un élément de commande non linéaire selon l'invention;

les figures 11 à 14, une autre variante du procédé de fabrication selon l'invention;

les figures 15 et 16, des exemples de formes d'électrodes de commande couplées à des conducteurs de colonnes par des éléments de commande non linéaire selon l'invention.

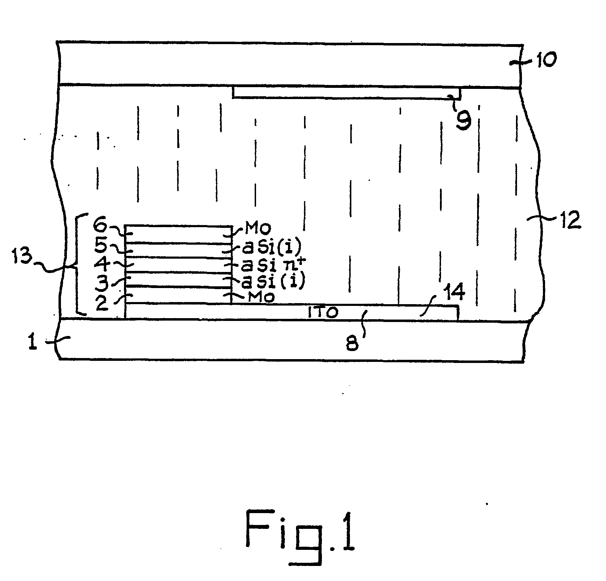

En se reportant à la figure 1, on va tout d'abord décrire un exemple de réalisation d'un élément de commande non linéaire.

Un tel élément de commande comporte une couche d'un matériau conducteur 8 déposée sur une face plane d'une lame de substrat 1.

Sur cette couche 8 est déposé un élément de structure mésa et constitué successivement de cinq couches différentes:

- une première couche d'un matériau métallique 2, tel que du molybdène (Mo) ;
- une première couche d'un matériau semi-conducteur amorphe non dopé 3, tel que du silicium amorphe non dopé, noté aSi(i) sur la figure 1 ;
- une couche d'un matériau semi-conducteur amorphe dopé 4, tel que du silicium dopé n+ ;
- une deuxième couche d'un matériau semi-conducteur amorphe non dopé 5 de même type que celui de la première couche 3 ;

- une deuxième couche d'un matériau métallique 6, tel que du molybdène comme pour la première couche 2.

Cet élément de commande non linéaire peut être utilisé pour commander une cellule d'affichage à cristaux liquides. Une deuxième lame de substrat 10 est alors associée au substrat 1. Entre les deux lames de substrat 1 et 10 est placé un cristal liquide 12. La couche de matériau conducteur 8 constitue une électrode de commande 14 et possède une forme appropriée. La lame de substrat 10 porte également une électrode de commande 9 de même forme et mêmes dimensions que l'électrode de commande 14 et placée en vis-à-vis de cette dernière.

La commande de cellule à cristal liquide se fait par application d'une tension entre l'électrode 9 et la deuxième couche métallique 6 à l'aide de moyens non représentés. Le circuit électrique comporte donc: l'électrode 9, la couche de cristal liquide 12, l'électrode 14, la première couche métallique 2, les couches de matériau semi-conducteur 3, 4 et 5 et la deuxième couche métallique 6. Les couches de matériau semi-conducteur amorphe non dopé 3 et 5 et la couche de matériau semi-conducteur amorphe dopé 4, comprises entre les deux couches de matériau métallique 2 et 6, constituent deux diodes Schottky montées en série et en opposition. Ces deux diodes ne permettent le passage d'un courant qu'à partir d'un seuil de tension. Ce seuil détermine le seuil de commutation de la cellule à cristal liquide.

Comme cela est connu dans la technique, les deux lames 1 et 10 étant en matériau transparent tel que du verre et les électrodes 9 et 14 étant également en matériau transparent tel que de l'oxyde d'Indium et d'étain, la cellule fonctionne en transmission optique.

Selon un autre mode de réalisation, la première couche métallique 2 peut recouvrir l'électrode de commande 14 et être réfléchissante. La lame 1 n'a alors pas besoin d'être transparente et la cellule fonctionne en réflexion optique.

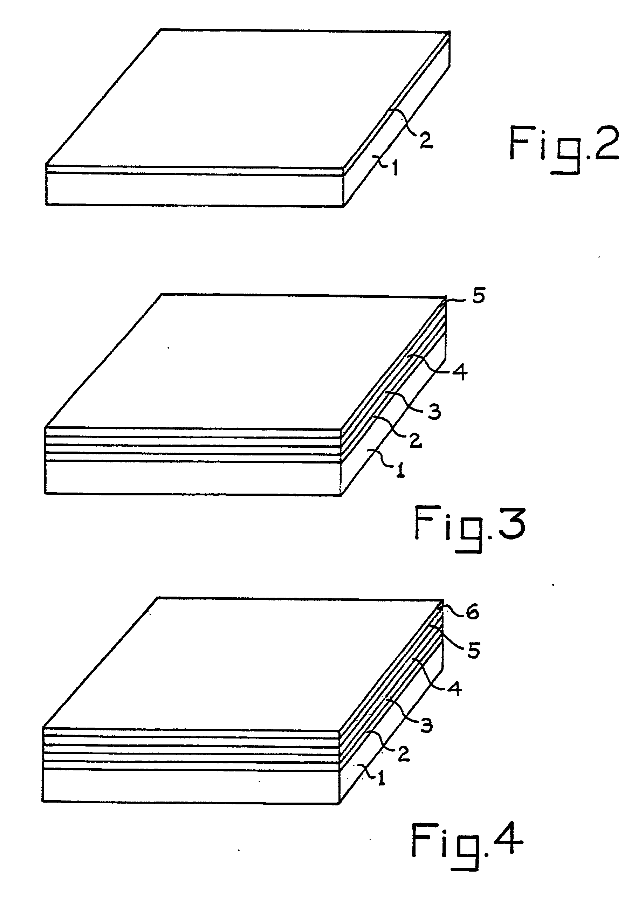

En se reportant aux figures 2 à 7, on va maintenant décrire un exemple de procédé de réalisation de l'invention.

Sur une lame de substrat 1 tel qu'une lame de verre, on dépose une couche de métal 2 tel que du platine, du molybdène ou du palladium par évaporation ou pulvérisation cathodique sous vide. L'épaisseur de cette couche métallique 2 doit être de quelques centaines d'Angstroem d'épaisseur. On obtient ainsi une structure telle que représentée en figure 2.

Au cours d'une deuxième phase, on dépose une première couche 3 de silicium amorphe non dopée.

Ce dépôt se fait de préférence par dépôt assisté par plasma (Glow-discharge en terminologie anglo-saxonne) à une température d'environ 250 degrés Celsius. On peut également procéder par épitaxie en phase vapeur (CVD ou Chemical Vapor Deposition) à environ 600 degrés Celsius, ou encore par épitaxie en phase vapeur à pression réduite (LPCVD ou Low Pressure Chemical Vapor Deposition) à environ 550 degrés Celsius. L'épaisseur de la couche 2 réalisée doit être comprise entre 200 et 600 nm. Dans le cas de dépôt par épitaxie (CVD ou LPCVD), il conviendra de prévoir une post-hydrogénation pour passiver les défauts des liaisons pendantes, c'est-à-dire combler les liaisons brisées.

Au cours d'une troisième phase, on dépose une couche 4 de silicium amorphe dopé n+. La méthode de dépôt utilisée peut être l'une des trois méthodes précédentes.

L'épaisseur de la couche 4 de silicium amorphe dopé n+ doit être comprise entre 30 et 100 nm.

Au cours d'une quatrième phase, on dépose une deuxième couche 5 de silicium amorphe non dopé. La méthode de dépôt utilisée peut être également l'une des trois méthodes précédentes et l'épaisseur de la couche obtenue est égale à celle de la première couche 3 de silicium amorphe non dopé.

La structure obtenue à l'issue de cette quatrième phase est telle que représentée en figure 3.

Au cours d'une cinquième phase, on effectue un dépôt d'une couche de métal 6 tel que du platine, du molybdène ou du palladium par évaporation ou pulvérisation cathodique sous vide. L'épaisseur de cette couche métallique doit être de quelques centaines d'Angstroem d'épaisseur. On obtient une structure telle que représentée en figure 4.

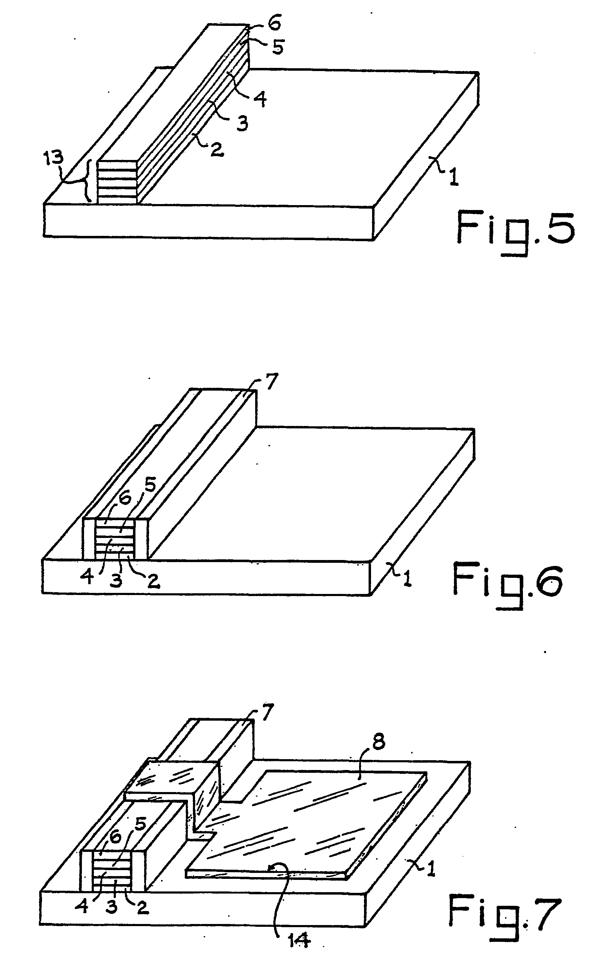

Au cours d'une sixième phase, on réalise par photolithographie une structure mésa dans les cinq couches 2, 3, 4, 5 et 6 déposées précédemment. Pour cela, on masque la zone correspondant à la structure mésa à réaliser, à l'aide d'un masque de résine de protection. On attaque ensuite les couches 2 à 6 par gravure sèche (plasma) ou gravure chimique dans la zone non masquée, puis on enlève la résine de protection. On obtient ainsi une structure, telle que représentée en figure 5, ayant la forme d'une colonne 13.

Au cours d'une septième phase, on effectue la passivation des flancs de la colonne 13. Cette passivation peut se faire par différentes méthodes. Elle peut se faire par un dépôt isolant inorganique 7, tel que SiO₂, suivi d'une attaque anisotrope de type RIE (Reactive Ion Etching en terminologie anglo-saxonne) qui laisse l'isolant uniquement sur les flancs de la colonne 13.

Dans le cas où le substrat 1 est transparent, on peut également effectuer cette passivation par un dépôt d'une résine polyimide photosensible (de type négatif) suivi d'une insolation à travers le substrat à l'aide d'une source lumineuse placée du côté opposé à la colonne 13 par rapport au substrat 1. Les couches métalliques 2 et 6 font écran à la lumière pour la résine située sur la couche métallique 6 à la face supérieure de la colonne 13. Ces couches métalliques font donc office de masque de photogravure. La résine non insolée est dissoute après développement. L'ensemble de la pièce de la figure 5 est alors recouvert d'une couche d'isolant excepté la face supérieure de la colonne 13.

Pour obtenir ce résultat on peut également, avant d'enlever la résine de protection prévue dans la sixième phase décrite précédemment et qui se trouve alors sur la face supérieure de la colonne 13, déposer à basse température par décharge gazeuse (Glow discharge en terminologie anglo-saxonne) à basse température (150°C environ), une couche d'isolant tel que SiO₂ ou Si₃N₄. On procède ensuite à l'enlèvement de la couche de résine, éliminant ainsi la couche d'isolant se trouvant sur la face supérieure de la colonne 13.

Au cours d'une huitième phase, on procède au recuit de la couche d'isolant pour la solidifier. La température du recuit dépend de la nature exacte de l'isolant, ce qui est connu dans la technique.

Au cours d'une neuvième phase, on dépose une couche 8 d'un matériau conducteur qui peut être un matériau transparent dans le cas d'une utilisation de l'élément de commande dans un écran de visualisation fonctionnant en transmission. On pourra ainsi déposer une couche d'oxyde mixte d'étain et indium (ITO) ou un matériau équivalent (In₂O₃). Une telle couche aura une épaisseur de 50 à 100 nm.

Au cours d'une dixième phase, on masque à l'aide d'un masque une surface de la couche 8 en matériau conducteur et on effectue une attaque de la couche 8.

Ce masquage constitue la deuxième opération de masquage du procédé. Il ne nécessite aucune précision de positionnement particulier.

La forme de ce masque est telle que l'on réalise à la surface du substrat 1 une électrode 14 telle que représentée en figure 7. Sur cette figure on voit que la colonne 13 est couplée à l'électrode 14 par un élément tel que réalisé précédemment et comprenant successivement une couche métallique 2, une couche de silicium amorphe non dopé 3, une couche 4 de silicium amorphe dopé n+, une couche de silicium amorphe non dopé 5, et une couche métallique 6. Un élément de commande ainsi décrit constitue deux diodes Schottky montées en série et en opposition.

Le procédé de réalisation de l'invention décrit précédemment permet de réaliser collectivement sur une plaque de substrat un ensemble d'électrodes 14, de colonnes 13 et d'éléments de commande couplant chaque électrode à une colonne 13.

Il est à noter que la structure obtenue représentée en figure 7 correspond au cas où les flancs de la colonne ont été passivés selon la première méthode décrite précédemment au cours de la septième phase. Dans le cas où les flancs de la colonne ont été passivés selon l'une des deux autres méthodes, une couche d'isolant recouvre le substrat 1 et les flancs de la colonne 13. L'électrode 14 est alors fabriquée sur cette couche d'isolant.

Enfin, au cours d'une onzième phase on effectue un recuit de la couche de matériau conducteur 8 (ITO) à basse température (200°C à 300°C).

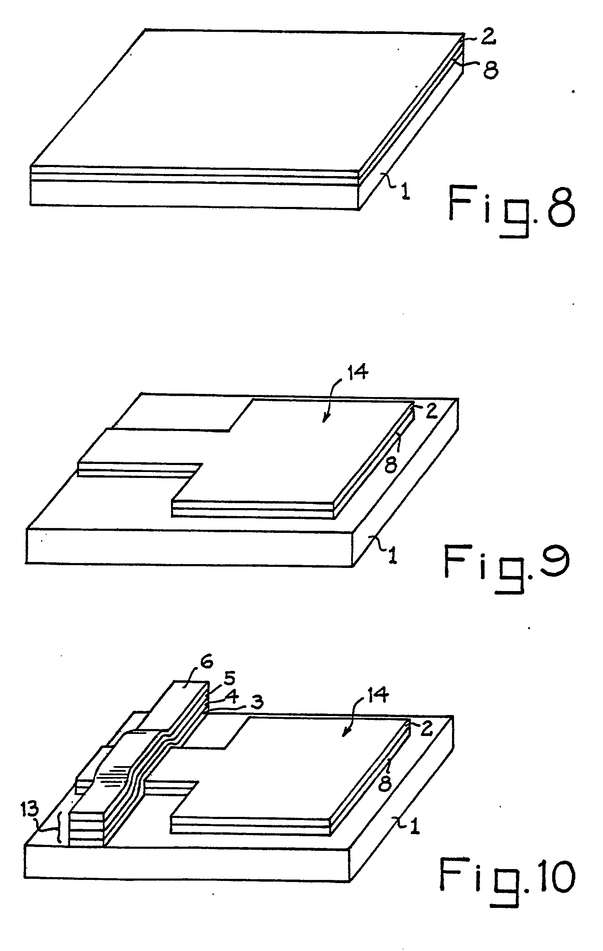

En se reportant aux figures 8 à 10, on va maintenant décrire une variante du procédé de l'invention.

Selon ce procédé on dépose, sur une plaque de substrat 1, une couche de matériau conducteur 8 tel que de l'ITO puis une couche d'un matériau métallique 2 (figure 8).

On découpe ensuite dans ces deux couches au moins une électrode 14 (figure 9).

Sur l'ensemble ainsi obtenu on dépose successivement une couche de silicium amorphe non dopé 3, une couche 4 de silicium amorphe dopé n+, une couche de silicium amorphe non dopé 5, une couche de matériau métallique 6. On découpe ensuite, dans ces quatre couches déposées, une colonne 13 chevauchant une partie de l'électrode 14. On obtient ainsi une structure telle que représentée en figure 10. On retrouve ainsi une structure similaire à celle de la figure 1 dans laquelle l'élément de commande est constitué de diodes Schottky en série et en opposition avec la différence que l'électrode 14 comporte une couche de matériau métallique 2. Néanmoins, par le même procédé, il est possible d'obtenir la même structure que celle représentée par la figure 1 en prévoyant la découpe de l'électrode 14 dans la couche 8, avant le dépôt du matériau métallique 2. La structure obtenue présentera alors la particularité de pouvoir fonctionner en transmission dans la mesure où le substrat 1 est transparent.

Cette variante de procédé de l'invention utilise les mêmes techniques de dépôt, de découpe et de recuit que dans le premier procédé décrit. Elle ne nécessite que deux opérations de masquage, celle nécessaire à la découpe de l'électrode 14 et celle nécessaire à la découpe de la colonne 13. Les épaisseurs des couches sont les mêmes que celles prévues précédemment.

En se reportant aux figures 11 à 14, on va maintenant décrire une autre variante du procédé de réalisation de l'invention.

Selon ce procédé, au cours de cinq premières phases successives on dépose, sur un substrat 1, respectivement :
- une couche 8 d'un matériau conducteur (ITO) ;
- une couche d'un matériau métallique 2 ;
- une couche de silicium amorphe non dopé 3 ;
- une couche 4 de silicium amorphe dopé n⁺ ;
- une couche de silicium amorphe non dopé 5 .

On obtient une pièce telle que représentée en figure 11.

Au cours d'une sixième phase, on découpe, dans les cinq couches déposées, la forme d'une électrode. On obtient une structure représentée en figure 12.

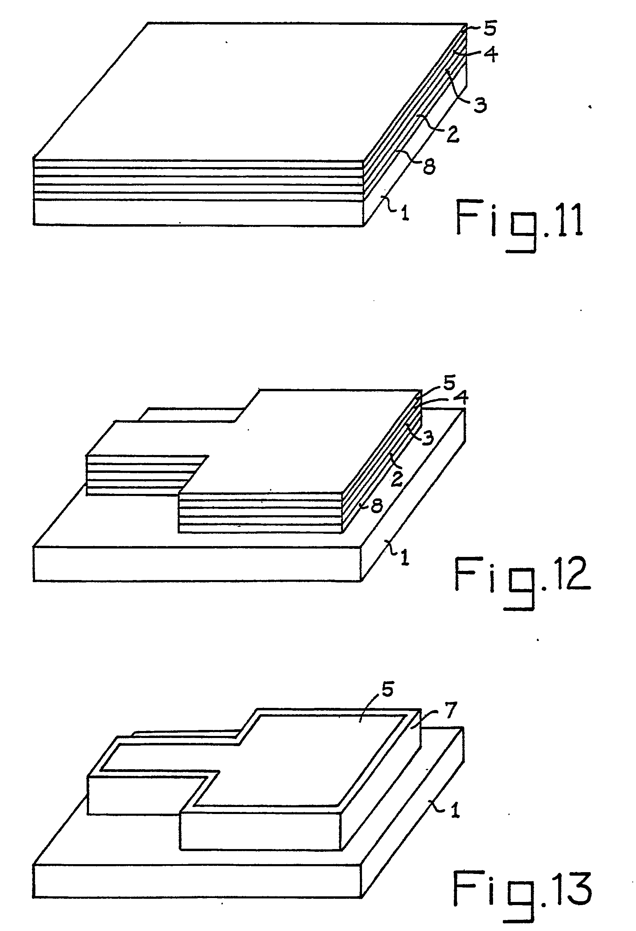

Au cours d'une septième phase, on passive à l'aide d'une pellicule 7 les flancs de l'électrode. On obtient une structure représentée en figure 13.

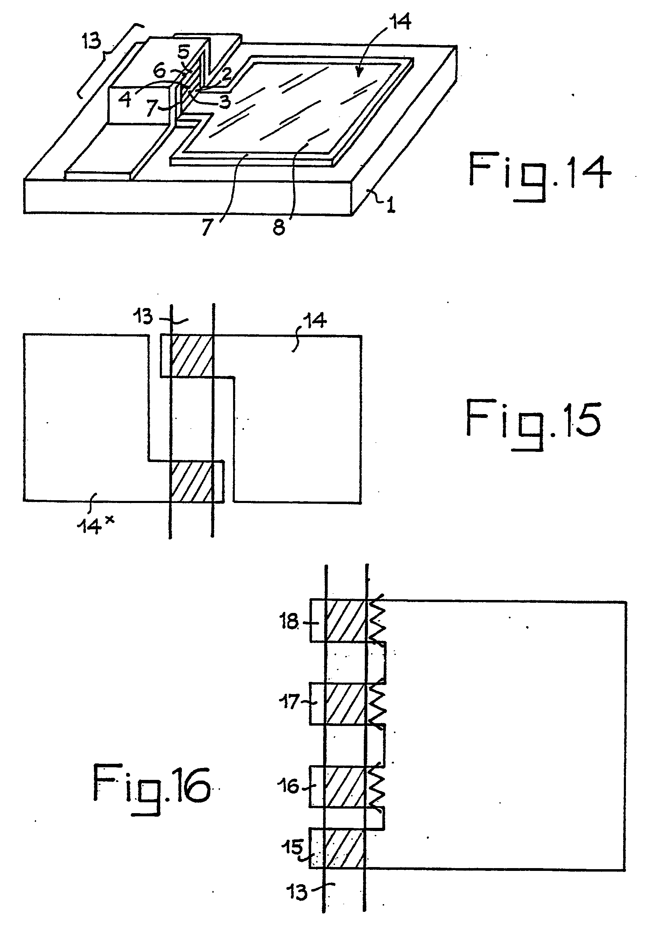

Au cours d'une huitième phase, on effectue un dépôt d'une couche d'un matériau métallique 6. On découpe ensuite, selon une colonne 13, chevauchant l'électrode 14, le matériau métallique 6 et les quatre couches 2, 3, 4 et 5 sans attaquer la couche de matériau conducteur 8. On obtient ainsi une structure telle que représentée en figure 14 dans laquelle la pellicule 7 isole la couche de matériau métallique 6 des autres couches déposées. La structure est semblable à celle représentée en figure 1.

Les différentes phases de ce procédé sont réalisées selon les mêmes techniques que celles décrites précédemment. Cette variante de procédé de réalisation n'utilise elle aussi que deux opérations de masquage seulement, celle permettant d'obtenir l'électrode 14 et celle permettant d'obtenir la colonne 13.

Les variantes du procédé selon l'invention décrites précédemment permettent de réaliser collectivement sur grande surface des électrodes 13 et des colonnes 14. Ils permettent, comme cela est représenté en figure 15, de dupliquer une électrode 14, par une électrode 14ˣ couplée à la même colonne 13.

Ces variantes permettent, comme cela est représenté en figure 16, de coupler une électrode 14 à une colonne 13, par plusieurs éléments de commande non linéaires tels que les quatre éléments 15, 16, 17, 18. Des éléments de commande défectueux ou inutilisés tels que 16, 17 et 18 pourront être éliminés par une découpe au laser effectuées dans des zones, indiquées par les lignes brisées sur la figure 16, à la base de rattachement des éléments de commande à l'électrode 14.

Les variantes décrites précédemment permettent également de réaliser des éléments de commande comportant chacun deux diodes de type PIN montées en série et en opposition. Dans ce cas, au lieu d'avoir trois couches de silicium (deux couches de silicium non dopé encadrant une couche de silicium dopé), on prévoit cinq couches de silicium :
- une couche de silicium amorphe dopé p⁺ ;
- une couche de silicium amorphe non dopé ;
- une couche de silicium amorphe dopé n⁺ ;
- une couche de silicium amorphe non dopé ;
- Une couche de silicium amorphe dopé p⁺.

Les variantes du procédé de l'invention se déroule alors de la même façon avec la différence que le nombre de phases de dépôt de silicium est de cinq au lieu de trois.

## Revendications

1. Procédé de fabrication d'un élément de commande non linéaire pour écran de visualisation disposé sur une face plane d'un substrat comportant les phases successives suivantes:

a) une première phase de dépôt d'une première couche d'un matériau métallique (2);

b) une deuxième phase de dépôt d'une première couche d'un matériau semi-conducteur amorphe non dopé (3),

c) une troisième phase de dépôt d'une couche d'un matériau semi-conducteur amorphe dopé (4);

d) une quatrième phase de dépôt d'une deuxième couche d'un matériau semi-conducteur amorphe non dopé (5);

e) une cinquième phase de dépôt d'une deuxième couche d'un matériau métallique (6);

f) une sixième phase de découpage dans toutes lesdites couches (2 à 6), déposées au cours des phases précédentes, d'une colonne de commande (13),

g) une septième phase de passivation des flancs de la colonne (13) réalisée au cours de la phase précédente;

h) un huitième phase de dépôt, sur l'ensemble substrat (1) et colonne (13), d'une couche d'un matériau conducteur (8);

i) une neuvième phase de découpage d'au moins une électrode de commande (14) connectée à la deuxième couche de matériau métallique (6), dans la couche de matériau conducteur (8).

2. Procédé de fabrication d'un élément de commande non linéaire pour écran de visualisation disposé sur une face plane d'un substrat comportant les phases successives suivantes:

a) une première phase de dépôt d'une couche de matériau conducteur (8);

b) une deuxième phase de dépôt d'une première couche de matériau métallique (2);

c) une troisième phase de découpe, dans les deux couches précédentes, d'au moins une électrode de commande (14);

d) une quatrième phase de dépôt d'une couche d'un matériau semi-conducteur amorphe non dopé (3);

e) une cinquième phase de dépôt d'une couche d'un matériau semi-conducteur amorphe dopé (4);

f) une sixième phase de dépôt d'une deuxième couche d'un matériau semi-conducteur amorphe non dopé (5);

g) une septième phase de dépôt d'une deuxième couche de matériau métallique (6);

h) une huitième phase de découpe dans lesdites couches (2 à 6) déposée au cours des phases c) à g) précédentes d'une colonne de commande (13) sans attaque de l'électrode de commande et de telle façon qu'une portion de ladite colonne (13) soit en contact avec l'électrode de commande (14).

3. Procédé selon la revendication 2, caractérisé en ce que la troisième phase de découpe est réalisée avant la deuxième phase de dépôt d'une première couche de matériau métallique (2).

4. Procédé de fabrication d'un élément de commande non linéaire pour écran de visualisation disposé sur une face plane d'un substrat comportant les phases successives suivantes exécutées sur le substrat (1):

a) une première phase de dépôt d'une couche d'un matériau conducteur (8);

b) une deuxième phase de dépôt d'une première couche d'un matériau métallique (2);

c) une troisième phase de dépôt d'une première couche d'un matériau semi-conducteur amorphe non dopé (3);

d) une quatrième phase de dépôt d'une couche d'un matériau semi-conducteur amorphe dopé (4);

e) une cinquième phase de dépôt d'une deuxième couche d'un matériau semi-conducteur amorphe non dopé (5);

f) une sixième phase de découpe dans toutes les couches précédemment déposées d'au moins une électrode de commande (14);

g) une septième phase de passivation des flancs de l'électrode de commande (14);

h) une huitième phase de dépôt d'une deuxième couche d'un matériau métallique (6);

i) une neuvième phase de découpe d'une colonne de commande (13) dans la deuxième couche de matériau métallique et les matériaux de l'électrode de commande (14) déposés au cours au moins des phases b) à d) sans attaquer la couche de matériau conducteur (8).

5. Procédé de fabrication d'un élément de commande selon la revendication 4, caractérisé en ce que la neuvième phase de découpe d'une colonne de commande (13) n'attaque pas la première couche de matériau métallique (2).

6. Procédé de fabrication selon l'une quelconque des revendications 1, 2, 3, 4 ou 5, caractérisé en ce que la phase de découpe d'une colonne de commande (13) est telle qu'une colonne est couplée à plusieurs électrodes de commande (14).

7. Procédé de fabrication selon l'une quelconque des revendications 1 à 6, caractérisé en ce que la phase découpe d'une colonne de commande (13) est telle qu'une colonne de commande est couplée en plusieurs points à chaque électrode de commande (14).

## Claims

1. A method for the manufacture of a non-linear control element for a viewing screen placed on a plane face of a substrate comprising the following successive phases:

(a) a first phase of deposition of a first layer of metallic material (2);

(b) a second phase of deposition of a first layer of an amorphous non-doped semiconductor material (2);

(c) a third phase of deposition of a layer of an amorphous doped semiconductor material (4);

(d) a fourth phase of deposition of a second layer of non-doped amorphous semiconductor material (5);

(e) a fifth phase of deposition of a second layer of metallic material (6);

(f) a sixth phase of cutting, in all the said layers (2 through 6), deposited in the course of the preceding phases, a control column (13);

(g) a seventh phase of passivation of the flanks of the column (13) produced in the preceding phase;

(h) an eighth phase of deposition, on the structure made up of the substrate (1) and the column (13), of a layer of a conductive material (8), and;

(i) a ninth phase of cutting at least one control electrode (14) connected with the second layer of metallic material (6), in the layer of conductive material (8).

2. A method of manufacture of a non-linear control element for a viewing screen placed on a plane face of a substrate comprising the following successive phases:

(a) a first phase of deposition of a layer of conductive material (8);

(b) a second phase of deposition of a first layer of metallic material (2);

(c) a third phase of cutting, in the two preceding layers, of at least one control electrode (14);

(d) a fourth phase of deposition of layer of an amorphous non-doped semiconductor material (3);

(e) a fifth phase of deposition of a doped amorphous semiconductor material (4);

(f) a sixth phase of deposition of a second layer of a non-doped amorphous semiconductor material (5);

(g) a seventh phase of deposition of a second layer of metallic material; and

(h) an eighth phase of cutting, in the said layers (2 through 6) deposited in the course of the preceding phases (c through g), of a control column (13) without attack on the control electrode and in such a manner that a portion of the said column (13) is in contact with the control electrode (14).

3. The method as claimed in claim 2, characterized in that the third phase of cutting is performed prior to the second phase of deposition of a first layer of metallic material (2).

4. A method for the manufacture of a non-linear control element for a viewing screen placed on a plane face of a substrate comprising the following successive stages performed on the substrate (1):

(a) a first phase of deposition of a layer of a conductive material (8);

(b) a second phase of deposition of a first layer of a metallic material (2);

(c) a third phase of deposition of a first layer of a non-doped amorphous semiconductor material (3);

(d) a fourth phase of deposition of a layer of a doped amorphous semiconductor material (4);

(e) a fifth phase of deposition of a second layer of a non-doped amorphous semiconductor material (5);

(f) a sixth phase of cutting, in all the previously deposited layers, of at least one control electrode (4);

(g) a seventh phase of passivation of the flanks of the control electrode (14);

(h) an eighth phase of deposition of a second layer of a metallic material (6); and

(i) a ninth phase of cutting of a control column (13) in the second layer of metallic material and the material of the control electrode (14) deposited in the course of at least the phases (b) through (d) without attacking the conductive material (8).

5. The method of producing a control element as claimed in claim 4, characterized in that the ninth phase of cutting a control column (13) does not attack the first layer of metallic material (2).

6. The method of production as claimed in any of the preceding claims 1, 2, 3, 4 and 5, characterized in that the phase of cutting a control column (13) is such that a column is coupled with several control electrodes (14).

7. The method of manufacture as claimed in any one of the preceding claims 1 through 6, characterized in that the phase of cutting a control column (13) is such that a control column is coupled at several points with each control electrode (14).

**Patentansprüche**

1. Verfahren zur Herstellung eines auf einer ebenen Seite eines Substrats angeordneten, nichtlinearen Steuerelementes für einen Bildschirm mit den folgenden aufeinanderfolgenden Phasen:

a) eine erste Phase des Niederschlags einer ersten Schicht aus metallischem Material (2);

b) eine zweite Phase des Niederschlags einer ersten Schicht aus einem amorphen, nichtdotierten Halbleitermaterial (3);

c) eine dritte Phase des Niederschlags einer Schicht eines amorphen, dotierten Halbleitermaterials (4);

d) eine vierte Phase des Niederschlags einer zweiten Schicht eines amorphen, nichtdotierten Halbleitermaterials (5);

e) eine fünfte Phase des Niederschlags einer zweiten Schicht eines metallischen Materials (6);

f) eine sechste Phase des Ausstanzens einer Steuersäule (13) in allen im Verlauf der vorangehenden Phasen niedergeschlagenen Schichten (2 bis 6);

g) eine siebte Phase der Passivierung der Seitenwände der im Verlauf der vorangehenden Phase verwirklichten Säule (13);

h) eine achte Phase des Niederschlags einer Schicht eines leitendenen Materials (8) auf der Gesamtanordnung des Substrats (1) und der Säule (13);

i) eine neunte Phase des Ausstanzens wenigstens einer mit der zweiten Schicht aus metallischem Material (6) verbundenen Steuerelektrode (14) in der Schicht aus leitendem Material (8).

2. Verfahren zur Herstellung eines auf einer ebenen Seite eines Substrats angeordneten, nichtlinearen Steuerelementes für einen Bildschirm, mit den folgenden aufeinanderfolgenden Phasen:

a) eine erste Phase des Niederschlags einer Schicht aus leitendem Material (8);

b) eine zweite Phase des Niederschlags einer ersten Schicht aus metallischem Material (2);

c) eine dritte Phase des Ausstanzens wenigstens einer Steuerelektrode (14) in den zwei vorangehenden Schichten;

d) eine vierte Phase des Niederschlags einer Schicht aus einem amorphen, nichtdotierten Halbleitermaterial (3):

e) eine fünfte Phase des Niederschlags einer Schicht aus einem amorphen, dotierten Halbleitermaterial (4);

f) eine sechste Phase des Niederschlags einer zweiten Schicht aus einem amorphen, nichtdotierten Halbleitermaterial (5);

g) eine siebte Phase des Niederschlags einer zweiten Schicht aus metallischem Material (6);

h) eine achte Phase des Ausstanzens einer Steuersäule (13) in den im Verlauf der vorangehenden Phasen c) bis g) abgelagerten Schichten (2 bis 6), ohne die Steuerelektrode anzugreifen und derart, daß sich ein Teil der Säule (13) mit der Steuerelektrode (14) in Kontakt befindet.

3. Verfahren gemäß Anspruch 2, dadurch gekennzeichnet, daß die dritte Phase des Ausstanzens vor der zweiten Phase des Niederschlags einer ersten Schicht aus metallischen Material (2) ausgeführt wird.

4. Verfahren zur Herstellung eines auf einer ebenen Seite eines Substrats angeordneten nichtlinearen Steuerelementes für einen Bildschirm, mit den folgenden, auf dem Substrat (1) ausgeführten, aufeinanderfolgenden Phasen:

a) eine erste Phase des Niederschlags einer Schicht aus leitendem Material (8);

b) eine zweite Phase des Niederschlags einer ersten Schicht aus metallischem Material (2);

c) eine dritte Phase des Niederschlags einer ersten Schicht aus amorphem, nichtdotiertem Halbleitermaterial (3);

d) eine vierte Phase des Niederschlags einer Schicht aus amorphem, dotiertem Halbleitermaterial (4);

e) eine fünfte Phase des Niederschlags einer zweiten Schicht aus amorphem, nichtdotiertem Halbleitermaterial (5);

f) eine sechste Phase des Ausstanzens wenigstens einer Steuerelektrode (14) in allen vorher abgelagerten Schichten;

g) eine siebte Phase der Passivierung der Seitenwände der Steuerelektrode (14);

h) eine achte Phase des Niederschlags einer zweiten Schicht aus metallischem Material (6);

i) eine neunte Phase des Ausstanzens einer Steuersäule (13) in der zweiten Schicht aus metallischem Material und in den im Verlauf wenigstens der Phasen b) bis d) abgelagerten Materialien der Steuerelektrode (14), ohne die Schicht aus leitendem Material (8) anzugreifen.

5. Verfahren zur Herstellung eines Steuerelementes gemäß Anspruch 4, dadurch gekennzeichnet, daß die neunte Phase des Ausstanzens einer Steuersäule (13) die erste Schicht aus metallischem Material (2) nicht angreift.

6. Verfahren zur Herstellung gemäß einem der Ansprüche 1, 2, 3, 4 oder 5, dadurch gekennzeichnet, daß die Phase des Ausstanzens einer Steuersäule (13) von der Art ist, daß eine Säule mit einer Mehrzahl von Steuerelektroden (14) gekoppelt ist.

7. Herstellungsverfahren gemäß einem der Ansprüche 1 bis 6, dadurch gekennzeichnet, daß die Phase des Ausstanzens einer Steuersäule (13) von der Art ist, daß eine Steuersäule an einer Mehrzahl von Punkten mit jeder Steuerelektrode (14) gekoppelt ist.

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16